# EUROPEAN PATENT APPLICATION

(11) **EP 1 902 625 A1**
(43) Date of publication of application: **26.03.2008**
(21) Application number: 07114394.5
(22) Date of filing: 15.08.2007
(51) Int. Cl.: A23C 19/09

(54) **Methods of fortifying foods with vitamin D and food products thus prepared**

(30) Priority: 22.09.2006 US 534349
(71) Applicant: Kraft Foods Global, Inc., Northfield IL 60093 (US)
(72) Inventor: BALDWIN, Cheryl J, Mundelein, IL 60060 (US); BROUILLETTE, Richard, Buffalo Grove, IL 60089 (US); AKASHE, Ahmad, Mundelein, IL 60060 (US); MEHNERT, David Webb, Lake Villa, IL 60046 (US); CLARKSON, Arlene Cheryl, Chicago, IL 60614 (US); KWIAT, Christine, Madison, WI 53718 (US); KOCHER, Amanda Lynn, Buffalo Grove, IL 60089 (US)
(74) Representative: Smaggasgale, Gillian Helen

(57) **Abstract**

Methods are provided for making nutrient fortified cheeses and the resulting cheese products. These methods maximize nutrient retention in the final packaged product by fortifying desired portions of the product and minimize fortification in other portions of the product. Moreover the fortification methods described herein allow significant amounts of nutrient supplements to be delivered per serving of product without adversely affecting functionality or product quality. Cheeses fortified by the disclosed methods retain their desired textures, mouthfeel, flavor, and other organoleptic properties.

## Description

### FIELD OF THE INVENTION

The invention relates to methods of making nutrient fortified foods, and particularly, to methods of fortifying cheeses with vitamin D and the resulting cheese products.

### BACKGROUND OF THE INVENTION

Vitamin D is an important nutrient for a healthy body. Vitamin D promotes the body's absorption of calcium, which is essential for the normal development and maintenance of healthy teeth and bones. Deficiencies of vitamin D can lead to osteoporosis in adults or rickets in children. In order to ensure sufficient vitamin D consumption, milk has commonly been fortified with vitamin D since the 1930's and 40's. Due to the importance of milk in the daily diet, consumers traditionally obtained sufficient amounts of vitamin D through their daily milk consumption. As a result, there was little incentive to investigate or improve the fortification of other foods for mass consumption.

However, most likely due to competition from other beverages, the per capita fluid milk consumption in the United States has been steadily decreasing since about 1945. According to the USDA, in 1945 the US population consumed about 45 gallons of fluid milk per person. In 2001, the yearly consumption rate of fluid milk had dropped to just under about 23 gallons per person. Due to such downward trends in milk consumption, there now is more of a desire to fortify other foods with vitamin D and other nutrients in order to compensate for the reduction in vitamins being consumed through fluid milk.

On the other hand, American consumption of other dairy products, such as cheese, is increasing. In 2001, according to the USDA, Americans consumed 30 pounds of cheese per person, which is 8 times more than they did in 1909 and more than twice as much as they did in 1975. Due to decreased milk consumption, there is now a desire to fortify cheeses, especially natural cheeses with vitamin D, to compensate for the decreased consumption in milk.

However, fortification of non-milk dairy products, such as natural cheeses, presents difficulties in maintaining pleasing organoleptic properties as well as maximizing nutrient retention in the desired and final food product. When fortifying cheese in large quantities, maximizing nutrient retention in the final packaged product is desirable in order to minimize waste and product costs. Vitamins or other nutrients retained in by-product streams, whey, product edge trim, reject, or rework material result in less fortification in the desired food product and increased costs due to the waste of the nutrients in unusable portions of the food product. Moreover, the inclusion of such vitamin or other nutrient in such by-product streams, whey, product edge trim, or rework material may reduce the ability to use these materials in other products.

The simplest method of product fortification is typically achieved by blending the desired nutrient into the food product while it is being produced. A common example is the fortification of milk in which vitamin A is typically blended into the milk during production. Other examples include the fortification of milk with calcium phosphates as disclosed in US Patent Application Publication No. 2003/ 0165597, or the fortification of unripened diary products such as skim milk and yogurt with combinations of dicalcium phosphate and magnesium phosphate as disclosed in US Patent No. 6,039,978.

However, in some foods, blending the nutrient into the food during manufacture results in unacceptably high levels of wasted nutrient or imparts undesirable or unpredictable results to the final product. Fortifying natural cheese is one such example. Current methods for supplementing cheese products add the supplement in-situ to the fermenting dairy composition as generally disclosed in US Patent No. 6,007,852. However, fortifying cheese in this manner often results in an unacceptable quantity of the nutrients being lost in the whey stream rather than being retained in the curd. Such fortified whey by-product also has a diminished value for other uses. For example, the by-product whey from natural cheese manufacture is typically used in the production of baby foods; vitamin D fortified whey is generally not suitable for such use. In addition to the high levels of wasted nutrient, such fortification methods may also adversely affect the fermentation through the production of undesired compositions that may negatively affect sensory qualities, texture, mouthfeel and other organoleptic properties.

Attempts have been made to maximize the amount of nutrient retained in the curd rather than the whey. For example, natural cheese has been fortified with vitamin D in-situ by first blending the vitamin D into a lipid-containing carrier material, such as a milk fat or cream, which is then incubated or aged for a period of time before fermentation. The incubation period has been found to increase the amount of vitamin D retained in the curd, and reduces loss of the nutrient to the whey by-product. Incubating or aging appears to allow the vitamin D to migrate into milk fat globules prior to fermentation, which then can be more efficiently trapped in a curd product of the fermentation. After sufficient aging, such as up to sixteen hours, the vitamin D/lipid solution is then directly added to the cheese vat milk either prior to or during cheese fermentation.

Yet another attempt at in-situ fortification of natural cheeses with vitamin D replaces the incubation of the above described method with intense mechanical mixing techniques, such as homogenization. See, e.g., Banville et al. "Comparison of Different Methods for Fortifying Cheddar Cheese with Vitamin D," International Dairy Journal 10,375-382 (2000). In the method of Banville, natural cheese is fortified by first adding vitamin D into a small amount of cream, which is then homogenized and directly added to the raw milk prior to fermentation. Similar to the aging step, the homogenization appears to aid in the retention of the vitamin D in the curd rather than the whey.

However, even if acceptable levels of nutrients are retained in the desired portions of the food (e.g., curd) rather than in by-product streams (e.g., whey), adding nutrients too early in the manufacturing process may still result in unacceptable nutrient losses. For example, fortified product trim, reject, and other waste (e.g., such as underweight pieces, edge trim, etc.) removed from the process after fortification, but prior to final product packaging, may also result in unacceptable levels of wasted nutrients. Such fortified waste product may also have diminished value for other uses.

Again referring to a natural cheese, for example, fortification in-situ - even if the method maximizes the fortification in the curd rather than the whey - still results in undesired fortification in any product trim, reject, or other waste streams that may result from further processing of the cheese. Such fortified cheese by-product streams may not be suitable for processed cheese or other uses. In addition, the fortified cheeses must be tracked throughout the supply chain so that it is not intermixed with products not desiring fortification. Therefore, the logistics of making fortified and unfortified cheeses in the same manufacturing facility are more complicated.

Other fortification methods are known, but usually require additional processing steps or are not suitable for some foods, such a natural cheese. For instance, as generally disclosed in US Patent Nos. 3,767,824; 3,784,716; and 6,011,016, it is known to fortify ready-to-eat cereals by tumbling the product in a drum or rotating pan in order to provide a surface coating of the nutrients thereon. US Patent No. 3,852,497 also describes fortifying cereal with magnesium. WO 98/0038 discloses fortifying dry snack foods, such as potato chips. US Patent No. 3,957,966 discloses fortifying dry foods.

In these methods, to ensure the coating is sealed on the food product, the coating or product may be heated during the tumbling step (or tumbled after heating), or a final barrier coat may be applied thereon after the product is tumbled in the drum. However, such fortification methods that involve tumbling the product, heating, or a barrier coat are not suitable for all products, especially a natural or processed cheese. For example, cheese slices can not be fortified in a drum tumbler because damage to the cheese slice would occur.

Moreover, even if the cheese could be coated in such a manner, the subsequent barrier coat or heat sealing of the present methods can not be completed with most cheeses. As disclosed by the present methods, the barrier coat, which ensures the coating remains on the product, is often an aqueous sugar solution in which the water is evaporated simply by contact with the hot temperatures of the freshly cooked food product or through a finish dryer. Such sugar coating is not desirable on a cheese. Even if a sugar coating were desirable on a cheese product, the cheese would not be at a temperature sufficient to evaporate significant water from the barrier coat; it would not be desirable to subject the cheese to a heating step because the high temperatures may adversely affect the cheese quality or appearance.

As generally disclosed in US Patent Nos. 6,090,417; 6,326,038; and 6,426,102 it is also known to fortify a cheese with certain vitamins or other nutritional supplements by first shredding the cheese to accept the fortification followed by a blending (e.g., tumbling) of the cheese shreds and fortifying additives, and then compressing the coated cheese shreds back into a homogenous mass. US Patent Application Publication No. 2003/0021873 also discloses a similar method of fortifying a shredded cheese with a calcium anti-caking agent.

Fortification methods that shred and recombine cheese have significant additional processing steps: receive the coating (i.e., shredding and blending) and finish the product (i.e., compressing into a final form). The additional processing steps increase manufacturing complexity and costs. Also, coated particles may tend to loosen and flake or dust off from the cheese shreds as coated by the prior methods, creating visible detritus in the food packages and/or interfere with package sealing operations.

As a result, a method of fortifying a food product, such as a natural or process cheese, is desired that maximizes retention of added nutrient supplements in the final product and does not adversely affect the functionality, quality or organoleptic attributes such as mouthfeel, texture, flavor and so forth. There remains a need, therefore, for methods that introduce nutritional supplements into cheese products while providing cheeses that retain their favor, texture, and mouthfeel. There further remains a need to provide cheese products fortified with any of a broad range of nutritional supplements. The present invention fulfils these and other needs.

### SUMMARY OF THE INVENTION

The invention provides methods of fortifying food products with vitamin D to maximize nutrient retention in the final packaged product by fortifying desired portions of the food product and minimizing fortification in other portions of the food product. The methods described herein reduce, and preferably eliminate, undesired or unneeded fortification in by-product, waste, whey, product trim, reject, and/or rework to permit more flexibility in how such product streams are used. Moreover the fortification methods herein allow significant amounts of nutrient supplements to be delivered per serving of food product without adversely affecting functionality or product quality. Foods fortified by the disclosed methods retain their desired textures, mouthfeel, flavor, and other organoleptic properties. The methods of this invention are especially useful in the preparation of vitamin D fortified natural cheeses and process cheese slices.

In particular embodiments, methods are provided for fortifying cheese by topical application of a fortifying agent to an outer surface thereof in significant levels without loss of product quality. These topical treatment methods can be implemented at the point-of-packaging in an efficient and integrated manner. This advantage effectively eliminates the need for introduction and presence of nutrient supplements during upstream food processing where certain food ingredients, chemistries, and intermediates may be more sensitive to certain high nutrient levels, potentially adversely impacting processability and product quality in conventional processing schemes.

A general method of making a nutritionally-fortified cheese product by topical treatment of the fortifying agent comprises providing cheese, which includes one or more discrete cheese units, each having an outer surface, wherein each of the discrete cheese units preferably has a mass of at least about 0.4 g and not greater than about 3500 g. The outer surface of at least one of the discrete cheese units is contacted with a nutritional supplement, preferably in the absence of mixing or contact with another cheese unit (i.e., tumbling, drum coating, rotating pan, and the like), to provide one or more nutritionally-fortified discrete cheese units acquiring the nutritional supplement in an amount providing at least about 10% DV of the nutritional supplement per serving of the cheese. The nutritionally fortified discrete cheese units are then packaged, and preferably immediately packaged after fortification. The nutritionally fortified discrete cheese units each may comprise a self-supporting shape independently selected from the group consisting of slice, cube, brick, slab, crumb, shred, stick, string, loaf, and other shapes. The nutritional supplement may be selected from the group consisting of vitamins, minerals, antioxidants, probiotics, botanicals, and mixtures thereof. In one particular embodiment, the nutrient is vitamin D. The nutritional supplement can optionally contain other functional ingredients including but not limited to colors, flavors, antimycotic agents, and anticaking agents.

For purposes herein, the outer surface means any external surface of the food product or any portion of the food product external surface. For example, if the cheese unit is a slice, then the outer surface preferably is external major surfaces or a portion thereof; however, the outer surface may also include edges or portions of the edges of the slice. If the cheese unit is a cube, brick, slab, crumb, or shred, then the outer surface preferably is the area forming the external surface of the particular shape or a portion thereof. If the cheese unit is a stick or string, then the outer surface is the major cylindrical surfaces or a portion thereof; however, the outer surface may also include the ends or portions thereof of the stick or string.

In a preferred embodiment, the method of making a nutritionally-fortified cheese product by topical treatment of the fortifying agent comprises applying a flowable premix material, which includes a fluid medium and the nutritional supplement, to the outer surface of the cheese unit, and then optionally drying the applied premix material, such as by pressurized gas application or drying as assisted via an evaporative aid ingredient included in the premix material. The flowable premix material may be applied to the outer surface of the cheese unit by a fluid coating technique selected from the group consisting of spraying, dispersing, roller coating, brushing, casting, and other suitable coating methods. The flowable premix material containing the nutrient may be selected from the group consisting of an aqueous solution, an emulsion, an aqueous dispersion, an oil dispersion, a slurry, and the like. The evaporative aid, if used, may be, for example, an edible alcohol and the like.

In an alternative embodiment, the flowable premix material comprises a flowable, solid particulate premix material, which includes a farinaceous powder and a nutritional supplement, applied to the outer surface of the cheese unit. The farinaceous powder may be a starch powder, and it may be used in combination with anticaking agents, and other functional ingredients. The solid particulate premix may be applied to the outer surface by a powder coating technique such as, for example, electrostatic spraying, metered delivery, and the like.

In other alternative embodiments of these methods, the fortifying agent is topically applied to the cheese unit surface by a nutrient carrier element comprising a nutritional supplement transferably carried by the nutrient carrier element. In one particular embodiment, the nutrient carrier element comprises a dissolvable or edible layer containing the nutritional supplement. The dissolvable or edible layer may comprise an edible, water-soluble film-forming polysaccharide. In another particular embodiment, a carrier sheet is used which is separable from the outer surface of the cheese unit after the nutrient has migrated from the carrier to the food surface during the shelf life of the packaged food product. The carrier sheet may be surface-coated or impregnated with a solution containing the nutritional supplement. The carrier element coated or impregnated with the nutritional supplement is contacted with the outer surface of the cheese unit for a length of time sufficient for the nutritional supplement to migrate from the carrier sheet to the outer surface of the cheese unit. The carrier sheet may be, for example, a fluid-absorbable sheet material, such as interleaf paper.

This invention also relates to nutritionally-fortified cheese products comprising a serving of a cheese comprising one or more discrete cheese units having an outer surface in contact with a nutrient carrier element comprising a nutritional supplement transferably carried by a nutrient carrier element. As indicated these products can effectively deliver about 10% DV or more of a nutrient or nutrients, such as vitamin D, per serving without adverse effects on product quality.

While methods described herein may be preferably used to fortify natural and processed cheeses of a variety of sizes, shapes, and weights, the disclosed methods may also be used with other food products, such as, but not limited to, other dairy products, meats, processed meats, snack foods, candies, and prepared meal and meal products. Furthermore, it is also preferred to utilize the methods herein to fortify food products with vitamin D, but the disclosed methods may likewise be used with other suitable vitamins, nutrients, minerals, antioxidants, probiotics, botanicals, colors, flavors, preservatives, anticaking agents, and mixtures thereof.

For purposes herein, the terms "serving"," % DV", and "DV" have meanings as respectively set forth for them under the provisions of 21 C.F.R. § 101.9 (April, 12005). A "unit" refers to an individual self-supporting food structure.

### BRIEF DESCRIPTION OF THE DRAWINGS

FIG. 1 is a process flow chart of methods for the fortification of a food product, such as cheese products, in accordance with embodiments of the present invention;

FIG. 2 is a schematic diagram of a method for topically fortifying a cheese brick with a solution containing a nutrient at the point of packaging in accordance with one embodiment of the present invention;

FIG. 3 is a schematic diagram of another method for topically fortifying a cheese stick with a solution containing a nutrient at the point of packaging;

FIG. 4 is a schematic diagram of a method for topically fortifying a cheese slice with a coated interleaf paper bearing a nutrient-containing coating at the point of packaging in accordance with an embodiment of the present invention; and

FIG. 5 is a schematic diagram of a method for topically fortifying cheese strings with a coated paper bearing a nutrient-containing coating at the point of packaging in accordance with an embodiment of the present invention.

### DETAILED DESCRIPTION

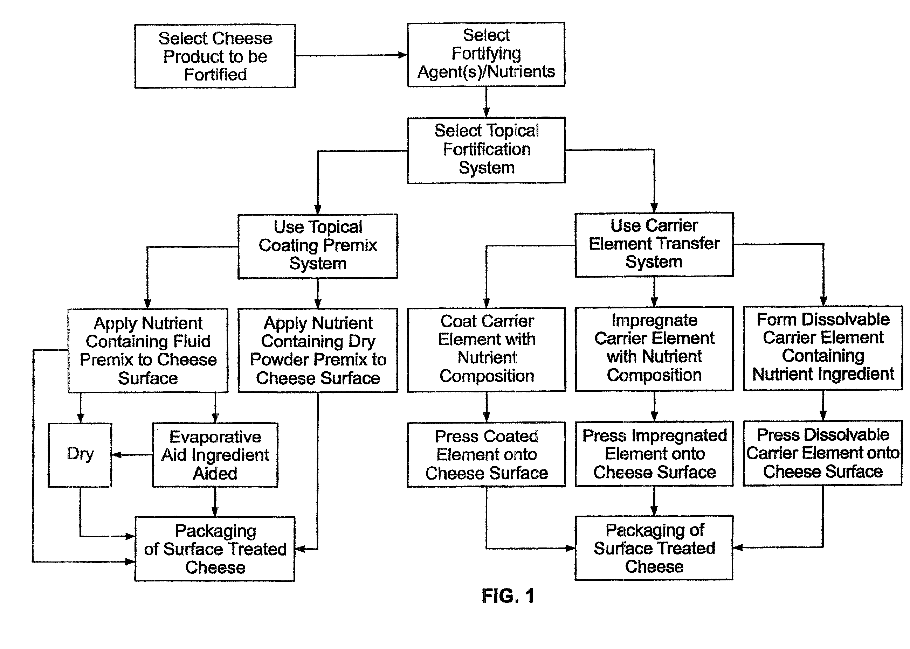

Referring to FIG.1, exemplary methods of fortification are illustrated using topical fortification systems that provides the nutrient(s) to the food product at the point-of-packaging. Fortifying at the point-of-packaging maximizes nutrient retention in the final product and minimizes nutrient losses in undesired food product portions.

In one form, a food product is fortified during its manufacture at the point-of-packaging by topically applying a nutritional supplement to an individual food product unit just prior to the final packaging of the individual unit. As used herein, point-of-packaging refers to either during or just prior to the actual packaging step in a manufacturing process. Preferably, the nutritional supplement is applied "in-line" as the food product is transferred to the packaging station. Fortification in this manner-just prior to final packaging and to individual food product units rather than large quantities of bulk food product upstream (e.g., prior to product portioning into individual units)-permits more efficient fortification and minimizes or substantially eliminates the loss of fortifying nutrient(s) in waste streams.

In a preferred embodiment, the selected nutritional supplement is topically applied to an outer surface of a cheese product via a method of the present invention at a coating or application rate (e.g., up to about 0.4 ml/serving-however this rate is widely variant depending on the nutrient and cheese product) effective to deliver at least about 10% DV of the supplement per serving of the food product. For instance, the nutritional supplement is applied to an outer surface of a cheese, such as cheddar cheese, Colby cheese, Monterey jack, havarti cheese, Muenster cheese, brick cheese, Gouda cheese, and mixtures thereof, or applied to the outer surface of a processed cheese.

Preferably the nutritional supplement is vitamin D (e.g., vitamin D₃ and vitamin D₂); however, the nutritional supplement may also contain other vitamins, minerals, antioxidants, probiotics, botanicals, and mixtures thereof. For example, the nutritional supplement may contain vitamin A, vitamin C, vitamin E, vitamin B₁, vitamin B₂, vitamin B₃, vitamin B₆, vitamin B₁₂, vitamin K, niacin, folate, folic acid, biotin, calcium, magnesium, copper, iron, zinc, chromium, iodine, phosphorus, pantothenic acid, potassium, sodium, manganese, phosphate salt, sulfate salt, chloride salt, propyl gallate, octyl gallate, dodecyl gallate, butylated hydroxyanisole, butylated hydroxytoluene, Acidophilus Bifidobacterium, Lactobacillus Johnsonii, ginseng, ginkgo biloba, Echinacea, and mixtures thereof.

Optionally, the nutritional supplement may also include other functional ingredients. For instance, the solution may contain anticaking agents, antimycotic agents, other antioxidants, preservatives, colors, flavors, or mixtures thereof. The nutritional supplement may also include a visible component to indicate the presence of the supplement on the food product surface. The visible component may be, for example, an amount of beta-carotene or annatto to impart a predetermined color to the nutritional supplement, and consequently, a predetermined color to the food product having the supplement thereon. Alternatively, the supplement may include invisible ink, which would render the supplement visible under an ultra-violet light or other separate viewing aid, or a component that develops color when a developer is added (e.g., starch developed with iodine, sodium chloride developed with silver nitrate). The use of an invisible component that can become visible would be advantageous because the supplement would not be visible under normal viewing circumstances and give the food substantially the same appearance as an unfortified food product, yet it could easily be verified that the food product contains the supplement through use of the separate viewing aid such as a UV light inspection station or developing station.

Again referring to the flowchart in FIG.1, the nutritional supplement is applied to the outer surface of individual food product units through a facilitating or other carrier agent that transports the desired nutrient(s) to the food product surface. In one form, the facilitating agent may be a powder or liquid premix containing the desired nutrient(s) therein that is applied to an outer surface of each individual food product to be packaged. In another form, the facilitating agent may be a carrier element or sheet containing the desired nutrient(s) that is applied to or wrapped around each individual food product unit to be packaged. With such methods, any product trim, waste, or rework would not be fortified because the nutrient(s) is applied after such waste streams are removed from the process.

**Fortification Powder.** One method of fortification at the point-of-packaging includes topically applying a fortified flowable, solid particulate premix, such as a fortified powder, to an outer surface of each individual food product unit just prior to the food product being packaged. Preferably, the fortified powder is applied to an outer surface of individual cheese units, such as an individual slice, stick, slab, cube, brick, block, shred, crumb, string, loaf, or other shape of cheese just before packaging. For purposes herein, such individual cheese units generally have a product weight ranging from about 0.4 grams (e.g., a cheese crumb) to about 3500 grams (e.g., a cheese loaf).

The fortified flowable, solid particulate premix preferably is a blend of a powdered carrier agent, such as a farinaceous powder, and the desired nutrient(s) to be applied to the food. In one form, the farinaceous powder includes a starch powder and other, optional functional ingredients. For example, the premix may also include anticaking agents (e.g., starches, cellulose, and the like) or antimycotic agents (e.g., Natamycin), flavors, or other desirable components. In this manner, the surface treatment not only fortifies the food product, but may also minimize or reduce product sticking and/ or undesired fungi growth.

In order to maintain the desired product quality (e.g., appearance, texture, mouthfeel, etc.), it is preferred that about 0.25 to about 0.75 percent, and most preferably, about 0.5 percent of the fortification powder be applied to the outer surface of a cheese through electrostatic spraying, controlled nozzle spraying, or a metered delivery of the powder. Levels above this range generally result in a visible powder on the surface of the food product, which is undesirable to the consumer. Levels below this range generally do not adequately cover the outer surfaces of the product, which may result in less than desired fortification.

The carrier for the fortification powder preferably includes about 70 to about 100 % starches (e.g., potato starches), 0 to about 20 % cellulose, 0 to about 10 % calcium (e.g., calcium sulfate) to which an amount of powdered vitamin D is added. It is preferred that vitamin D be added to the fortification powder in an amount to provide about 10% DV to each individual cheese unit that the fortification powder is applied thereon (e.g., about 40 IU per individual unit).

**Fortification Liquid.** Another method of food product fortification at the point-of-packaging involves topically applying a fortified liquid premix, such as a fortified solution, emulsion, suspension or oil, to an outer surface of the food product just prior to the food product being packaged. Similar to the fortified powder, it is preferred to apply the fortified solution to an outer surface of individual cheese units, such as an individual slice, slab, stick, shred, cube, brick, block, crumb, string, loaf, or other shape of cheese, having a unit weight ranging from about 0.4 grams to about 3500 grams. Preferably, the individual cheese unit may be a cheese slice of about 10 to about 40 grams. Using this fortification method, it has been discovered that about 35% to about 100% of the fortification in the fortified liquid premix can be transferred to the food product unit.

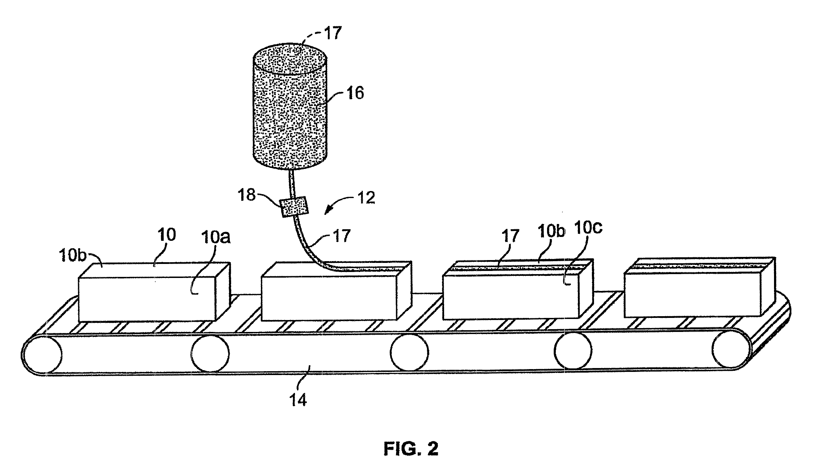

Referring to FIG. 2, one method of topically applying a fortified liquid solution to a food product outer surface is illustrated schematically using a brick of cheese 10 as an example. In this method, the cheese brick 10 is transported to a fortification station 12 via a conveyor 14 or other suitable transport. Prior to the fortification station 12, the cheese 10a is unfortified. The fortification station 12 includes a reservoir or other tank 16 to contain the fortification solution 17 and an applicator 18 to apply the solution onto an outer surface 10b of each individual cheese unit 10 by spraying, dispersing, roller coating, brushing, casting, combinations thereof, or other suitable methods to apply a solution to the surface 10b. After the fortification station 12 the cheese is now a fortified cheese 10c having the fortification solution 17 topically applied to the cheese outer surface 10b. As shown, the solution 17 is coated in a strip on the cheese surface 10b, but the surface coating may completely cover or only partially cover the surface 10b or applied in other configurations.

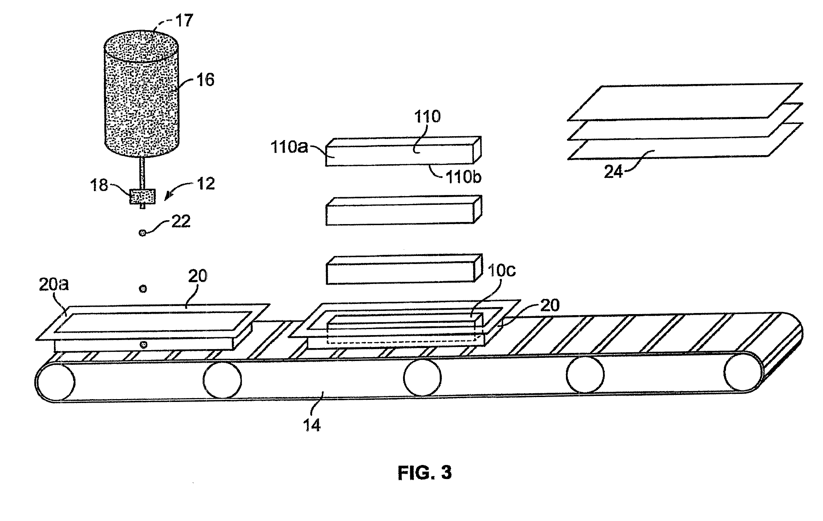

Referring to FIG. 3, another method of topically applying the fortified liquid solution to a food product outer surface is illustrated schematically using a single serving stick of cheese 110 as an example. In this method, the fortified solution is first injected into a cheese package 20 after which the cheese stick 110 is then inserted. Here, an empty cheese package 20a is transported via the conveyer 14 to the applicator station 12. The applicator 18 provides one or more drops 22 of the fortified solution 17 into the empty cheese package 20a. After depositing a quantity of the fortified solution 17 into the package 20, the untreated cheese 110a is then placed into the package 20 so that a cheese surface 110b contacts the solution 17 in the package to form a fortified cheese 110c. Optionally, to seal the package a lid 24 or other suitable sealant may also be applied to the package 20.

The fortified liquid premix includes a liquid carrier agent and an amount of the desired nutrient(s) blended therein. The carrier agent may be an aqueous solution, an emulsion, an aqueous dispersion, an oil dispersion, or a slurry. Preferably, the liquid carrier agent is an aqueous solution. Evaporation or absorption of the liquid carrier permits the food product surface to substantially retain its original appearance. The nutrient is preferably vitamin D in a predetermined amount such that about 10 % DV is applied to each individual food product unit that is coated with the premix. For example, the fortified liquid premix is an aqueous solution of vitamin D containing about 10 to about 10,000 IU per mil of vitamin D. Most preferably, the aqueous solution contains about 100 to about 400 IU per ml of vitamin D.

Optionally, the fortified liquid premix may also include other functional ingredients in addition to the carrier agent and nutrient(s). For instance, the solution may contain anticaking agents (e.g., starches, cellulose, and the like), antimycotic agents (e.g., sorbic acid, natamycin), antioxidants (e.g., vitamin C, vitamin E), minerals (e.g., magnesium), preservatives, colors, flavors, or mixtures thereof. For instance, the fortified liquid premix may include a visible marker to indicate the presence of the solution on the food product surface.

Furthermore, oxidation of sensitive nutrients, such as vitamin A, vitamin C, or B vitamins can also be stabilized with added antioxidants like tocopherols or stabilized with traditional encapsulation or in liposomes or in a liposome-like encapsulation.

**Drying of Premix Liquid.** After applying the fortified liquid premix onto the surface of the individual food product unit, it is preferred to maximize adherence of the to the food product surface through a subsequent surface treatment. Maximizing surface adherence helps to ensure that the nutrient(s) is maintained on the food product surface rather than removed in the packaging step or by contact with other food items during transport. Preferably, adherence of the nutrient(s) is improved by drying the premix solution onto the food product surface. While not wishing to be limited by theory, it is believed that the drying step increases the adherence of the nutrient(s) to the food product surface because, after drying, any oil and/or solid in the premix remain on the cheese surface forming a bond therebetween.

Possible drying techniques that may be employed include limited heat treatments, gas drying, air drying, evaporative aids, and the like. It is less preferred to dry the fortified solution through heat treatment because elevated temperatures may affect the shape, consistency, or quality of the individual cheese unit. It is most preferred, therefore, to use gas or air drying because such drying methods generally will not affect the quality of the cheese.

**Gas Drying.** One method to dry the premix is to direct a gas under positive pressure over the premix solution. For instance, a cheese product having the fortified liquid premix thereon is subjected to a low pressure gas stream, such as air, nitrogen, carbon dioxide, and the like, in order to evaporate liquids from the fortification solution via convection.

**Evaporative Aid Drying.** Another method to dry the fortified premix is to employ evaporation aids, such as including an amount of edible alcohol in the liquid premix. For instance, the fortification solution may also include about 0.1 to about 1 percent of edible alcohol as a drying aid. The edible alcohol may comprise, e.g., food grade ethanol, and the like. The addition of such levels of alcohol permit increased evaporation of liquids or permit a shorter or lower pressure gas stream to dry the premix. Alternatively, with sufficient edible alcohol in the premix, the solution may also dry itself as it is conveyed between fortification application and the final packaging station.

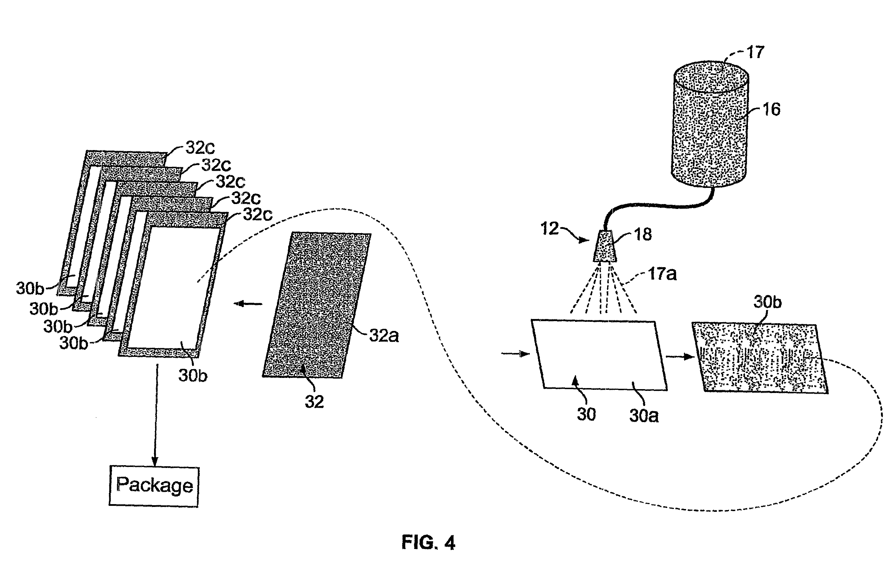

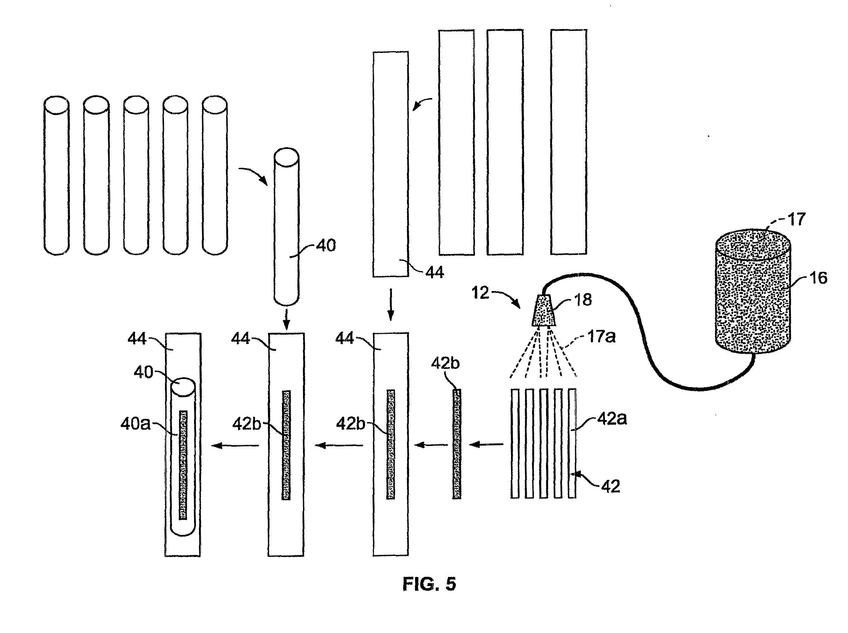

**Fortification via Transfer Carrier Element.** Referring to FIGS. 4 and 5, another method of a food product fortification at the point-of-packaging includes the use of a fortified carrier element, such as a sheet-form element, that is applied to the outer surface of individual food product units just prior to packaging. The carrier element includes the desired nutrient(s) coated thereon, or impregnated or intermingled therein. Over time, the nutrient(s) migrate from the carrier element to the food product to provide the desired fortification to the food.

Similar to the previous methods, the fortified carrier element may be applied to an outer surface of individual cheese units, such as an individual slice, slab, cube, stick, brick, block, crumb, shred, string, or other shape of cheese, having a unit weight of about 0.4 grams to about 3500 grams. During the typical product supply chain from a manufacturing facility to a grocery store display shelf, for example, sufficient time (e.g., about 1 to about 14 days) passes such that the nutrient migrates from the carrier element to the cheese in order to provide the desired fortification in the cheese. Using this method of fortification, it is expected that between about 30% and about 100% of the fortification in the carrier elements may be transferred to the food product.

For example, a cheese may be fortified just prior to packaging with vitamin D by contacting an outer surface of an individual cheese unit with an interleaf paper, a treated cellulose paper, or other solid matrix (e.g., filter paper, standard cellulose paper, and the like) having an amount of vitamin D coated thereon or impregnated therein. As illustrated schematically in FIG. 4, an interleaf 30 is used as the carrier sheet to fortify a slice of cheese 32. Here the applicator 18 is configured to form a spray 17a of the fortified solution 17 onto an untreated interleaf 30a to form a treated interleaf 30b having the desired nutrients coated on, impregnated therein, or intermingled with a surface of the interleaf 30. As further described below, the fortification station 12 may be in-line with the packaging station or off-line. The treated interleaf 30b is then placed in contact with an outer surface 32a of the cheese 32 to form a fortified slice of cheese assembly 32c, which over time will fortify the cheese slice as the nutrients migrate from the interleaf to the cheese. A plurality of fortified cheese slice assemblies 32c are prepared in a similar manner and packaged together with the treated interleaf sheets 30b interposed between adjacent cheese slices 32. The collection of cheese slice assemblies 32 may then be packaged in a known manner.

In another example, referring to FIG. 5, a string cheese 40 is fortified in a similar manner using a strip of material 42. An untreated strip 42a is treated using the nutrient spray 17a as described above to form a treated strip 42b. In this method, instead of applying the treated strip 42b to the string cheese 40, the treated strip 42b is first inserted into a string cheese over wrap 44. Subsequently, the string cheese 40 is inserted into the over wrap 44 and then an outer surface 40a of the string cheese 40 is contacted by the treated strip 42b when the over wrap 44 is sealed.

The fortified carrier element may replace a common, non-fortified interleaf paper that separates individual units of a food product in a package. While it is preferred that the fortified carrier element be used between slices of natural or processed cheese, the fortified nutrient carrier elements may also be used around string cheeses, blocks or loafs of cheese, cubes of cheese, between slices of processed meats, and the like to fortify such food items in a similar manner.

In this form of the fortification method, the nutrient carrier element is first coated or impregnated with a solution containing nutrient(s) and other optional functional ingredients. Preferably, the fortification solution is an aqueous solution of a nutrient(s) (e.g., vitamin D, beta carotene, etc.) in water to provide between about 100 and about 400 IU per ml of the nutrient(s). However, as one skilled in the art will appreciate, the amount of nutrient(s) provided in the solution will vary based on the final product usage and amount of fortification desired in the food product.

The carrier element is fortified either as a separate processing step prior to product packaging or concurrently as the product is being packaged. For example, standard interleaf paper may be fortified by applying a metered amount of the nutrient solution to one or both sides of the interleaf paper by spraying, marking, painting, coating, or other suitable application method. The fortification of the interleaf paper may occur in-line or just prior to the application of the interleaf to the cheese surface. In this manner, the coated interleaf paper is portioned into appropriately sized sheets and immediately inserted onto a slice of cheese as they are cut. With such in-line processing, the interleaf paper may be wet or moist from the nutrient solution, which may aid in the adhesion of the interleaf to the food product surface. Optionally, the fortified interleaf may be dried prior to contacting the cheese surface by heating, a gas stream, through evaporative aids (e.g., alcohol and the like), or other drying methods.

Alternatively, the interleaf may be fortified separately off-line during its manufacture and processed into a roll, which is unwound at the point of packaging. In this situation, the interleaf paper is preferably dry when it contacts the food product surface. In this method, standard paper processing techniques may be employed to fortify the interleaf paper during its manufacture. For instance, the nutrient(s) may be added to the pulp or other raw materials that are formed into the bulk interleaf sheet, or the nutrient solution may be coated or applied to one or both sides of an already formed interleaf sheet by the manufacturer via suitable methods, such as spraying, coating, marking, extruding, or other known paper coating methods.

The carrier element preferably does not utilize adhesive or other securing aids to attach it to the food product surface. The interleaf is typically held in contact to the food product surface by the sealing of the food product with an over wrap (i.e., vacuum packing, shrink wrapping, or other suitable packaging methods) or by being sandwiched between food product units. Depending on the food product, however, different packaging methods or even the use of an adhesive or a securing agent may be employed to hold the carrier element to the food product surface. While the carrier element is preferably a fortified interleaf paper, the carrier element may also be any material that retains its integrity during coating/ impregnation of the nutrient(s), during packaging with the food product, and during removal (e.g., peeling) from the food product that also permits a nutrient coated thereon or impregnated therein to migrate from the carrier element to the food product.

The carrier element may also be the product packaging that is used to wrap or otherwise package the food product. For instance, the carrier element may be a plastic over wrap film or a rigid plastic container having the nutrient coated on or impregnated therein. When the food product is packaged with such fortified packaging materials, the nutrient contained within or coated on the packaging material is transferred to the food product over time due to the packaging material's contact with the food product.

**Edible or Dissolvable Carrier Sheet.** Yet another method of a food product fortification at the point of packaging includes the use of a dissolvable or edible fortified carrier element that is applied to the outer surface of individual food product units just prior to packaging: The dissolvable or edible carrier is preferably a sheet, film, strip, or other form of material that includes or incorporates an effective amount of the desired nutrient(s) coated thereon, impregnated therein, or intermingled therewith as a film ingredient per se. The dissolvable or edible carrier may be applied directly to the food product surface or may be applied to the food product packaging. Over time, the nutrient(s) migrate from the carrier to the food product surface, the carrier may dissolve to deposit the nutrients onto the food product surface, or the carrier may remain on the food and be consumed when the product is eaten. Using this method of fortification, it is expected that between about 30% and about 100% of the fortification in the carrier element is transferred to the food product.

Preferably, the edible or dissolvable carrier element comprises an edible, water-soluble, film-forming hydrocolloid. In one form, the film forming hydrocolloid is an edible, film-forming polysaccharide, such as a modified polydextrose, modified cellulose, or modified starches. The hydrocolloid material may form a matrix-like material in which the nutrient supplement is dispersed and contained. Preferably, the edible or dissolvable film is formed from a solution containing mixtures of water, hydrocolloids, nutrient(s), vegetable oil (e.g., high oleic canola oil), glycerin, and/or polysorobate 60.

Optionally, the dissolvable or edible carrier sheet may also include other functional ingredients. For instance, the sheet may include-in addition to the desired vitamins, minerals, and other nutrients - an amount of anticaking agents (e.g., starches, cellulose, and the like), antimycotic agents (e.g., sorbic acid, natamycin), antioxidants (e.g., vitamin C, vitamin E, and the like, or mixtures thereof), flavorings, and colorants.

To form the edible or dissolvable carrier element, the ingredients are mixed and blended together to form a solution. In one method, the solution is then applied to a food grade paper (i.e., Wausau Paper, Mosinee, Wisconsin) using a brush or other suitable applicator to form a layer of the solution on the paper. The solution is then dried either by air drying, heating, or a gas stream to form the edible or dissolvable film. The film may be removed from the paper and applied to the food product surface or the paper and film combination may be applied directly to the food product surface using the paper as an outer backing. If applied along with the paper, after a predetermined length of time (e.g., at least about 24 hours), the paper may be removed, if desired, to leave only the film on the food surface.

Over time, the film may dissolve to provide the nutrients and other functional ingredients to the food or the film may remain on the food product surface and be consumed when the food is eaten. While not wishing to be limited by theory, it is believed that water diffusion from the food surface to the film is responsible for the film dissolving. However, the film may dissolve using other mechanisms.

A wide variety of nutritionally-fortified cheeses may be produced by this methods disclosed herein. These cheeses include, by way of non-limiting example, Cheddar cheese, Colby cheese, Monterey Jack, Havarti cheese, Muenster cheese, Brick cheese, Gouda cheese, Swiss cheese, and the like, as well as processed cheese products.

### EXAMPLES

The Examples that follow are intended to illustrate, and not to limit, the invention. All percentages used herein are by weight, unless otherwise indicated.

**Example 1.** An evaluation was performed to determine the effect of varying the level of a powdered carrier agent to an outer cheese surface. In this example, the amount of product clumping and visual appearance of a cubed cheese having different levels of a topically applied powdered carrier agent was studied.

Mild cheddar cheese was cubed. Each cube is about 5/8 x 5/8 x 1/4inches and had an average weight of about 1.9 grams. A powdered anti-caking agent containing about 60% potato starch, about 30% cellulose, and about 10% calcium sulfate was applied to an outer surface of the cheese cubes using a metered feed screw to deposit the powder on the cheese cubes as it moved by the feed screw on a conveyor belt. The powder was applied at levels of 0.5%, 0.75%, 1.0%, or 1.25%. The coated cheese cubes were then tumbled in a drum to distribute the anti-caking agent and packaged. The treated cheese cubes were visually evaluated for appearance and amount of clumping 15 and 30 days after packaging. Table 1 summarizes the visual observations made in this respect.

**Table 1**

| Cheese Type | Anticake Level, % | Aging | Visual Observations |
|---|---|---|---|
| Mild Cheddar | 0.5 | Initial | Slight powdery look, minimal or no clumping |
| Mild Cheddar | 0.5 | Day 15 | No visible powder, no sticking of product cubes |
| Mild Cheddar | 0.5 | Day 30 | No visible powder, some sticking, easily broken up with handling |
| Mild Cheddar | 0.75 | Initial | Cheese cubes covered in white powder, no sticking |
| Mild Cheddar | 1.00 | Day 15 | Cheese cubes covered in white powder, no sticking |
| Mild Cheddar | 1.25 | Day 30 | Cheese cubes covered in white powder, no sticking |

**Example 2.** A fortified cheese product was prepared by spraying individual slices of cheese with a vitamin D solution. Pre-sliced Cheddar cheese, approximately 4" x 4" square weighing approximately 23 grams each, were sprayed with a liquid fortified solution on one side of the cheese. The solution was prepared by diluting a 40,000 IU/ml stock vitamin D solution (Danisco, Copenhagen) with water to form the liquid fortified solution containing about 400 IU vitamin D/ ml. Each cheese slice was sprayed using a fine mist with about 0.4 grams of the solution and either air dried in ambient conditions, dried with a stream of air under low pressure, or dried with a stream of nitrogen under low pressure.

The samples that were air dried in ambient conditions had visible solution on the surface of the cheese and did not absorb or evaporate within 30 minutes. The samples dried under a stream of air or nitrogen exhibited partial absorption or evaporation within a minute of exposure to the drying step. The samples that were dried provided preferred results because it avoids solution run-off from the samples.

**Example 3.** Slices of cheese as described above in Example 2 were sprayed with a slurry of potato starch and vitamin D in water. The slurry was prepared by adding about 15 grams potato starch, about 1.6 grams vitamin D (DSM, Netherlands) to about 500 ml of the solution of Example 2. The slurry was heated to about 200°F, and at this temperature about 0.4 grams of the slurry was sprayed onto each slice of cheese.

The coated cheese slices were allowed to air dry or were immediately packaged wet. To package the slices, the cheese slices were either directly stacked on top of each other or packaged with standard, unfortified interleaf paper (Wausau Paper, Mosinee, Wisconsin) between each slice. The stacks of cheese were then loosely wrapped in standard packaging film and stored refrigerated for 2 months at about 40°F. The cheese slices were then evaluated for the amount of transfer of vitamin D to the cheese. The results of this evaluation are summarized in Table 2 below. A control sample with no fortification solution was also evaluated in a similar manner with and without an interleaf paper. The amount of vitamin D in the tested cheeses was analyzed using method 982.29 (modified) of the Association of Analytical Chemists (AOAC).

**Table 2**

| Sample | Cheese Surface During Packaging | Unfortified Interleaf | Vitamin D Transfer, % |
|---|---|---|---|
| Control 1 | no solution | No | 0 |
| Control 2 | no solution | Yes | 0 |
| A | Wet | No | 100 |
| B | Wet | Yes | 35 |
| C | Dry | No | 100 |
| D | Dry | Yes | 100 |

**Example 4.** Slices of cheese as described above in Example 2 were sprayed on one side with a slurry containing magnesium and vitamin D. The slurry was prepared by adding 80 grams of magnesium glycerophosphate to 100 ml of the solution described in Example 2. The slurry was sprayed on the cheese heated as in Example 3. About 0.4 grams of the slurry was sprayed onto each slice of cheese.

**Example 5.** Slices of cheese as described above in Example 2 were sprayed on one side with three different solutions. A first solution was prepared by mixing 99% potato starch with 1% powdered vitamin D (DSM, Netherlands). A second solution was prepared by mixing 79% potato starch, 20% cellulose, and 1% vitamin D. A third solution was prepared by mixing 69% potato starch, 20% cellulose, 10% calcium sulfate, and 1% vitamin D. About 0.4 grams of each solution was sprayed onto a separate slice of cheese.

**Example 6.** Slices of cheese as described above in Example 2 were sprayed with a peanut oil. Amounts of peanut oil ranging from about 0.002 ml to about 1 ml were evaluated. At all levels of application, an oily layer was observed on the surface of the cheese, and therefore, was determined to not be an appropriate carrier.

**Example 7.** Fortified Swiss and Cheddar cheese slices were prepared by applying a fortified carrier sheet to a surface of the cheese. The fortified carrier sheet was prepared by spraying a vitamin D solution onto the surface of the sheet and then air drying. The vitamin D solution was made by mixing about 0.1 g of vitamin D (DSM, Netherlands) to about 99.9 g of water to provide a fortification solution containing about 100 IU vitamin D/ml. About 0.4 ml of the vitamin D solution was sprayed onto one side of the interleaf paper (Wausau Paper, Mosinee, Wisconsin), common filter paper, and common copy paper to prepare three fortified papers.

The fortified papers were allowed to air dry for about 10 minutes. Each fortified paper and a control paper (un-fortified) was used to package stacks of cheese with 1 sheet of paper between slices of cheese. Two different cheese stacks were formed using standard mild Cheddar cheese and Swiss cheese. Each cheese stack was then sealed in a typical over wrap package. The product was stored for about six weeks at about 40°F. The cheese was unpackaged and evaluated for vitamin D transfer. The results are listed below in Table 3.

**Table 3**

| Sample | Carrier Sheet | Vitamin D Solution sprayed on Carrier Sheet | Amount of Vitamin D Transfer |
|---|---|---|---|
| Control | Interleaf paper | None | 0 |
| A | Interleaf paper | 0.4 grams | 30%* |
| B | Filter paper | 0.4 grams | 0% |
| C | Copy paper | 0.4 grams | 0% |

| | | | |
|---|---|---|---|
| *slice had about 5%DV/slice and about 10% DV/serving | | | |

**Example 8.** A qualitative experiment was conducted by adding an amount of beta-carotene to the vitamin D solution of Example 7. The addition of beta-carotene gave the solution an orange-yellow color. The colored solution was applied to the papers as described in Example 7 to form colored, fortified papers that were used to stack Swiss cheese slices as also described in Example 7. After six weeks of cold storage, the cheese slices were evaluated for visible color transfer from the paper to the cheese as compared to the whitish color of the original cheese. The cheese slices exhibited an orange-yellow color. Beta-carotene was also analyzed to be present in the slices.

**Example 9.** An aqueous solution containing about 0.5 grams annatto (i.e., color) and about 4 grams vitamin D (DSM, Netherlands) was prepared to qualitatively test the potential of a felt-tip applicator method of applying nutrients to a food product surface. The felt-tip applicator was constructed out of a colorless felt tip inserted into a sealed glass sample vial. The vial contained the color/vitamin solution. The solution absorbed into the felt tip and was then used to "mark" the color/vitamin solution onto several different surfaces. Marks were made with gentle pressure of the felt tip to the surface usually in a line across the surface.

The following surfaces were marked with the applicator: cheese, interleaf paper, and packaging film. After the interleaf paper was marked, it was then used to stack slices of cheese as described in Example 7. After the packaging film was marked, it was then used to package cheese blocks that were vacuum sealed so that the marks were in contact with the cheese. After the cheese was marked, it was stacked, packaged, and then vacuum sealed. All samples were evaluated after about 4 weeks, and in all instances, color transfer was observed.

**Example 10.** Commercially available edible film strips (Momentus Solutions, Marlton, New Jersey) that contained a range of nutrients were qualitatively tested for transfer of the nutrients, color, and flavor when applied to cheese slices. The edible films were placed on the surface of a natural cheese slice and refrigerated (about 40°F). About 24 hours later, the cheese was tasted and observed to confirm flavor, color delivery, and texture perception.

The cheese was found to contain all the nutrients originally provided in the film strip (i.e. riboflavin, thiamin, niacin, vitamin E, vitamin A, vitamin B12, vitamin B6, vitamin C, and zinc). The texture was not adversely affected. However, the cheese had color and a visible residue on the surface.

**Example 11.** A dissolvable or edible film was prepared to deliver nutrients and color to cheese. A solution having the composition in Table 4 below was prepared to form the film. Gum arabic was first hydrated in warm water (about 60°C) using a medium shear overhead mixer. When completely hydrated, beta carotene was diluted in vegetable oil and then slowly added to the gum solution. Finally, glycerin was added. The mixture was mixed further at high speed to form a solution having orange-yellow color.

**Table 4**

| **Ingredient** | **wt (g)** |
|---|---|
| Water | 380 |
| Gum arabic | 100 |
| Beta carotene (30%) | 2.5g |
| Vegetable oil | 22.5 |
| Glycerin | 10 |

The solution was applied to a food paper (Wausau Paper, Mosinee, Wisconsin) with a brush and allowed to dry at room temperature at about 72°. The coated paper was then placed between slices of white natural cheese (provolone). After 24 hours the cheese was separated from the paper. It was observed that the film was partially dissolved and that the cheese had an orange-yellow color.

**Example 12.** In this example, a dissolvable or edible film was prepared to provide nutrients and color to a cheese. A solution was prepared similar to Example 11 above, but also included 0.2% pre-melted polysorbate 60. The solution was then mixed at high speed in a food processor for better emulsification. It was observed that the film was partially dissolved and that the cheese had an orange-yellow color.

**Example 13.** A dissolvable or edible film was prepared similar to Example 11 above, but using the formulation of Table 5 below.

**Table 5**

| **Ingredient** | **wt (g)** |
|---|---|
| Water | 150 |
| N-Lock Starch | 43 |
| High oleic canola oil | 15 |
| Beta carotene solution | 1.5 |
| (30%) Polysorbate 60 | 0.5 |

In a beaker with an overhead mixer, starch was hydrated in water for about 5 to about 10 minutes. Beta carotene was first diluted in oil, and then slowly added to the starch solution. Polysorbate 60 was pre melted and added to the mixture. The mixture was then heated to about 50 to about 60°C and homogenized for about 1 minute using an Ultra Turax homogenizer.

The solution was brushed on paper to form a thin film layer. The film was allowed to dry at ambient temperatures for at least 2 hours. The paper was sandwiched between two slices of cheese and refrigerated for overnight at about 40°F. The next day, the paper was peeled off to transfer most of the film onto the surface of the cheese slice. This solution proved to be better dissolving on the surface of the cheese than the solutions of Examples 11 and 12.

**Example 14.** Dissolvable or edible films were prepared similar to Example 11 above, but also incorporated vitamin D instead of the beta-carotene. Two different dissolvable films were prepared having compositions according to Table 6 below and cast into films using the procedures of Example 13.

**Table 6**

| **Ingredient** | **wt (g) Formula 1** | **wt(g) Formula 2** |
|---|---|---|
| water | 150 | 150 |
| N-Lock starch | 43 | 43 |
| Vitamin D solution | 4.0 | 10 |
| High oleic canola oil | 11 | 5 |
| Polysorbate 60 | 0.5 | 0.5 |

The solutions were each coated as thin film onto a separate paper (one side only) and the film was allowed to completely dry at ambient temperatures as in Example 13. The paper with the dry film was then sandwiched between two slices of cheese and refrigerated for one month. It was observed that the film was completely dissolved within about 1 week, and testing after 1 month verified that Vitamin D was present in the cheese.

**EXAMPLE 15.** A fortified string cheese was prepared by injecting a vitamin D solution into a preformed string cheese package prior to placing the cheese product within the package. The vitamin D solution was prepared by diluting a 40,000 IU/ml stock vitamin D solution (Danisco) with sterile water to form a liquid fortified solution containing about 400 IU/ml of vitamin D. In each empty cheese package, about 0.1 ml of the fortified solution was added. The string cheese stick was then placed in the package, and then the package was sealed.

Upon analysis, about 50% of the vitamin D in the solution was transferred to the cheese. However, it is believed that the dilution of the fortified solution can be adjusted to obtain either more or less fortification of the cheese stick as desired.

It will be understood that various changes in the details, materials, and arrangements of formulations and ingredients, which have been herein described and illustrated in order to explain the nature of the invention may be made by those skilled in the art within the principle and scope of the invention as expressed in the appended claims.

## Claims

1. A method of making a nutritionally-fortified cheese product, comprising:
providing cheese comprising one or more discrete cheese units each having an outer surface, wherein each of said discrete cheese units has a mass between about 0.4 grams and about 3500 grams;
contacting the outer surface of at least one of said discrete cheese units with a nutritional supplement in the absence of mixing with another cheese unit to provide one or more nutritionally-fortified discrete cheese units acquiring the nutritional supplement in an amount providing at least about 10% DV of said nutritional supplement per serving of said cheese; and
immediately packaging the nutritionally-fortified discrete cheese units.

2. The method of claim 1, wherein the nutritionally-fortified discrete cheese units each comprise a self-supporting shape selected from the group consisting of slice, cube, stick, brick, slab, shred, crumb, string, and loaf.

3. The method of Claim 1 or 2, wherein the nutritional supplement comprises vitamin D.

4. The method of any one of Claims 1 to 3, wherein the contacting of the outer surface of the cheese unit comprises applying a flowable premix material comprising the nutritional supplement to the outer surface of at least one the cheese units.

5. The method of any one of Claims 1 to 4, wherein the contacting of the outer surface of the cheese unit comprises the steps of:
applying a flowable premix material comprising a fluid medium and the nutritional supplement to the outer surface of the cheese unit; and
drying the applied premix material.

6. The method of claim 5, wherein the drying comprises directing gas under positive pressure upon the applied premix material.

7. The method of any one of Claims 4 to 6, wherein flowable premix material is selected from the group consisting of an aqueous solution, an emulsion, an aqueous dispersion, an oil dispersion, and a slurry.

8. The method of any one of Claims 1 to 4, wherein the contacting of the outer surface of the cheese unit comprises injecting a flowable premix material into a preformed package prior to inserting the cheese unit into the package.

9. The method of any one of Claims 4 to 8, wherein the flowable premix material comprises ingredients selected from the group consisting of an anti-caking agent, an antimycotic agent, colors, and flavors.

10. The method of any one of Claims 4 to 9, wherein the flowable premix material comprises an evaporative aid to improve drying of the material on the discrete cheese unit outer surface.

11. The method of claim 10, wherein the evaporative aid is an alcohol.

12. The method of any one of Claims 1 to 3, wherein the contacting of the outer surface of the cheese unit comprises applying a flowable, solid particulate premix material comprising farinaceous powder and the nutritional supplement, to the outer surface of the cheese unit.

13. The method of claim 12, wherein the farinaceous powder comprises starch powder.

14. The method of claim 13, wherein the solid particulate premix material further comprises cellulose powder and calcium sulfate powder.

15. The method of any one of Claims 12 to 14, wherein the applying of the solid particulate premix comprises depositing the premix material onto the cheese unit in amount sufficient to deliver at least about 10% DV of the nutritional supplement per cheese serving.

16. The method of any one of Claims 1 to 3, wherein the contacting of the outer surface of the cheese unit comprises contacting the outer surface with a nutrient carrier element, comprising a nutritional supplement transferably carried by the nutrient carrier element.

17. The method of claim 16, wherein the nutrient carrier element comprises a dissolvable or edible layer containing the nutritional supplement.

18. The method of claim 17, wherein the dissolvable or edible layer comprises an edible, water-soluble film-forming polysaccharide.

19. The method of claim 16, wherein the nutrient carrier element comprises:
a carrier sheet with a coating applied thereon, the carrier sheet separable from the outer surface of the cheese unit, and
wherein the coating comprises the nutritional supplement, which is contacted with the outer surface of the cheese unit for a length of time sufficient for the nutritional supplement to migrate from the carrier sheet to the outer surface of the cheese unit.

20. The method of claim 19, wherein the carrier sheet comprises interleaf paper.

21. The method of claim 20, further comprising applying a solution containing the nutritional supplement to the interleaf paper to form the coating thereon prior to packaging, and contacting the outer surface of the cheese unit with the coated interleaf paper sheet such that the coating is moist when contacting the outer surface of the cheese unit.

22. The method of claim 20, further comprising applying a solution containing the nutritional supplement to the interleaf paper to form the coating thereon prior to packaging, and contacting the outer surface of the cheese unit with the coated interleaf paper sheet such that the coating is substantially dry when contacting the outer surface of the cheese unit.

23. The method of any one of Claims 16 to 22, wherein the nutrient carrier element is a packaging component in contact with the discrete cheese unit.

24. A nutritionally-fortified cheese product comprising a serving of a cheese comprising one or more discrete cheese units having an outer surface in contact with a nutrient carrier element comprising a nutritional supplement transferably carried by the nutrient carrier element.

25. The nutritionally-fortified cheese product of claim 24, wherein the nutritional supplement comprises vitamin D.

26. The nutritionally-fortified cheese product of Claim 24 or 25, wherein the nutrient carrier element comprises a dissolvable or edible layer.

27. The nutritionally-fortified cheese product of claim 26, wherein the dissolvable or edible layer comprises an edible, water-soluble film-forming polysaccharide.

28. The nutritionally-fortified cheese product of Claim 24 or Claim 25, wherein the nutrient carrier element comprises:
a carrier sheet which is separable from the cheese unit, and
a coating comprising the nutritional supplement, in contact with the outer surface of each of the cheese units.

29. The nutritionally-fortified cheese product of claim 28, wherein the carrier sheet comprises a fluid-absorbable sheet material.

30. The nutritionally-fortified cheese product of Claim 28 or 29, wherein the carrier sheet comprises interleaf paper.

31. The nutritionally-fortified cheese product of claim 28, wherein the coating comprises a dissolvable or edible layer supported on a face of the carrier sheet.
